# EUROPEAN PATENT APPLICATION

(11) **EP 3 381 324 A1**
(43) Date of publication of application: **03.10.2018**
(21) Application number: 18163609.3
(22) Date of filing: 23.03.2018
(51) Int. Cl.: A47B 87/00, A47B 95/00, F16B 12/26

(54) **AN IMPROVED COMPLEX OF ELEMENTS FOR ASSOCIATING A PROFILED MEMBER**

(30) Priority: 29.03.2017 IT 201700034739
(71) Applicant: Volpato Industrie S.p.A., 31027 Spresiano (Treviso) (IT)
(72) Inventor: BILLOTTO, Edoardo, 31027 Spresiano (Treviso) (IT)
(74) Representative: Piovesana, Paolo

(57) **Abstract**

An improved element assembly (2) for associating a profiled member (4) with a piece of furniture (5) or the like, characterized in that it comprises:
- a longitudinally extended profiled member (4) with a substantially L- or C-shaped cross section and provided, at the rear face thereof, with first elastic engagement means (16),
- at least one support element (8) comprising a body (30) which is provided in the internal area thereof with at least one hole (31, 32) for screws for fastening said support element (8) to a wall (6) of said piece of furniture (5) and which, at a first end area of said body (30), said support element (8) comprises second elastic engagement means (42) intended to cooperate with said first elastic engagement means (16) of said profiled member (4) and which, at the other end area of said body (30), which is opposite to the first one, comprises at least one pair of detachable interlocking junction members, of which one member of said pair is of the male type (44) and the other member of said pair is of the female type (46).

## Description

The present invention relates to an improved element assembly for associating a profiled member with a piece of furniture or the like.

It is known that many types of furniture have doors or door leaves without handles, in which the movement is permitted by the structure itself of the door or of the shutter.

In particular, many solutions of this type require that the user grabs the door, or the shutter, at the top, bottom or side edge thereof, and then pulls it by exerting a force on the rear surface of the door itself. Such solution, therefore, requires having an opening or an indentation with respect to the visible front surface of the piece of furniture, so as to leave the space required for the insertion of the hand of the user.

Mainly for aesthetic reasons, such an opening or indentation in the piece of furniture, which, for example, may be defined between the top surface of the piece of furniture and the shutter of a drawer or between two laterally articulated adjacent doors, is required to be suitably covered.

For this purpose, generally, substantially C-shaped profiled members, also called "slots", are used, with a concavity which is adapted to conceal from view the opening or indentation of the piece of furniture and, at the same time, defines a space suitable for the insertion of the hand of the user, so as to allow the latter to access the rear surface of the top, bottom or side edge of the door or drawer. Suitably, the C-profile is usually sized so that the ends thereof define suitable abutting areas for the door or the front panel of the drawer.

The slots are usually associated with the piece of furniture in an indirect manner, in the sense that they are secured to a support element, which is then fastened by means of screws to a horizontal and/or vertical wall of the piece of furniture at the opening or indentation to be covered.

In such context, a solution has already been proposed in which the slot is secured to the support element by means of fastening means, for example of the magnetic type, adhesive or with Velcro, which exert a force of attraction by means of the mutual contact surface thereof.

This solution is not satisfactory since it entails a rather complex, and therefore expensive, manufacturing, and also it does not allow for an easily detachable engagement of the slots on the support element.

Furthermore, a solution has already been proposed in which the support element is applied to the front edges of the piece of furniture while the slot is provided, at the rear thereof, with two protruding sections, which delimit between one another a single rather narrow groove for the snap engagement of a corresponding longitudinal rib obtained on the support element. This solution is not completely satisfactory since such support element is specifically adapted for vertical slots, i.e., for slots which may be used to cover a vertically extended opening.

Furthermore, a solution has already been proposed in which the same support element may be used to apply both vertical slots (i.e., which may be used to cover a vertically extended opening/indentation of the piece of furniture) and horizontal slots (i.e., which may be used to cover a horizontally extended opening/indentation). In particular, such support element is centrally constituted by two plates, orthogonal to one another, in which two corresponding series of holes are obtained; more in detail, the holes of the first series are arranged along a direction which is orthogonal with respect to the arrangement direction of the holes of the other series and, furthermore, at both the opposite ends thereof, it has respective engagement members, equal but oriented orthogonal to one another, so that one is adapted to engage the vertical slots and the other to engage the horizontal slots. Furthermore, the support element engagement members have toothed walls intended to cooperate with a corresponding counter-teething obtained on the walls of the engagement members obtained on the rear surface of the slot.

This type of solution is not completely satisfactory since it entails a highly complex, and therefore expensive, manufacturing, and, furthermore, it does not allow for a removable/detachable engagement of the slot from the support member.

FR2547522 describes a structure for supporting tools (for example, screwdrivers, pliers, hex keys, etc.). In particular, such structure comprises a flared U-plate with a central portion and two end portions elastically deformable so as to engage between the protruding edges of a supporting profiled member. Furthermore, on the end portions, openings, facing and aligned to one another, are obtained, which are intended to be crossed by corresponding tools to be supported. Furthermore, on the front face of the central portion, means are provided for (for example, tabs protruding or provided with a hole, or a forkshaped element) for retaining one or more tools in a suspended condition.

GB2240580 describes a clip comprising a central portion and two side portions ending with respective flanges intended to be inserted into corresponding grooves defined in a guide rail. The side portions are articulated with respect to the central portion so as to be arranged perpendicularly with respect to the latter. On the central portion, instead, a through hole or teeth for fastening an accessory are provided for.

US2016/0186925 describes a solution comprising a clip which has a rear portion which may be slidingly inserted within a guide rail while the front portion is provided with means for supporting an accessory.

US9597792 describes a solution comprising a longitudinally extended element which may be associated rearwardly, by means of magnetic means, to a piece of furniture or to a wall made of metal material, while frontally it has a longitudinal track - formed by two arms parallel with respect to one another and mutually spaced apart - along which a plurality of elements may be slidingly secured, each of which is provided rearwardly with an engagement arm and frontally with means for supporting various types of work tools.

EP1746321 describes a solution for fastening cylindrical elements, and, in particular, pipes and cables. In particular, this solution comprises a first body, which may be fastened to a wall, and a second closing body which snap engages with the first body so that the corresponding cylindrical element is clamped and retained between said two bodies.

It is the object of the invention to provide an improved element assembly for associating a profiled member with a piece of furniture or the like which overcomes the drawbacks of the known conventional solutions.

It is another object of the invention to suggest an element assembly adapted to cover both vertically extended and horizontally extended openings/indentations.

It is another object of the invention to provide an element assembly which allows to obtain a pleasant overall aesthetic effect and which provides the observer with the sensation of being in front of a high-quality product, both on an aesthetic and functional level.

It is another object of the invention to provide an element assembly which may be used to secure to one another two facing walls, so as to also cover the opening/indentation therebetween.

It is another object of the invention to provide an element assembly which allows for a simple, easy and quick mounting.

It is another object of the invention to provide an element assembly in which the profiled member may easily be removed/decoupled from the remaining elements.

It is another object of the invention to provide an element assembly which has an alternative characterization, both in constructive and functional terms, with respect to the conventional ones.

It is another object of the invention to provide an element assembly which may be obtained in a simple, quick and cost-effective manner.

It is another object of the invention to provide an element assembly which may be produced in series and in a quick and efficient manner.

It is another object of the invention to provide an element assembly which has both functional and aesthetic high standards, and is, at the same time, affordable, thus allowing the possibility of a large-scale circulation thereof.

These objects, both individually and in any combination thereof, as well as others which will become apparent from the following description, are achieved in accordance with the invention by an element assembly with the features indicated in claim 1, as well as by a method with the features indicated in claims 13, 14 and 15.

The present invention is further clarified hereafter in a preferred embodiment thereof, given purely by way of explanation and not by way of limitation, with reference to the accompanying drawings, in which:
- Figure 1: shows a perspective view of the element assembly in accordance with the invention,
- Figure 2: shows a first perspective view of the support element alone,
- Figure 3: shows a different perspective view thereof,

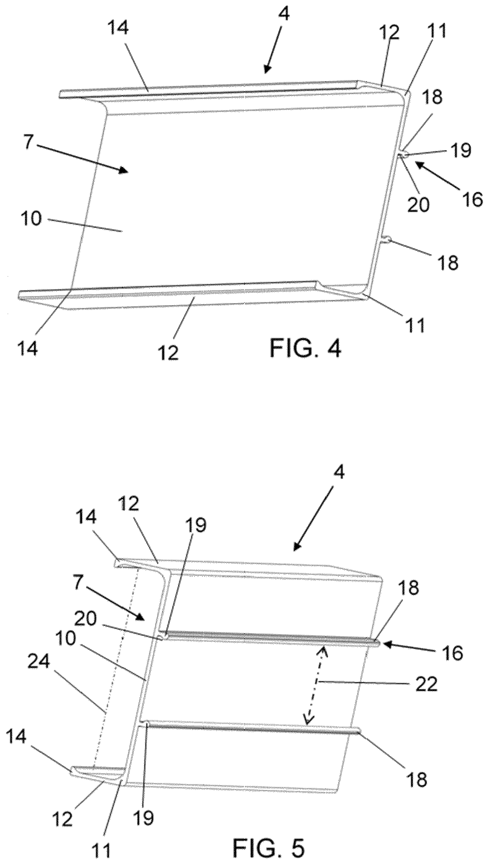

- Figure 4: shows a first perspective view of the profiled member,
- Figure 5: shows a different perspective view thereof,

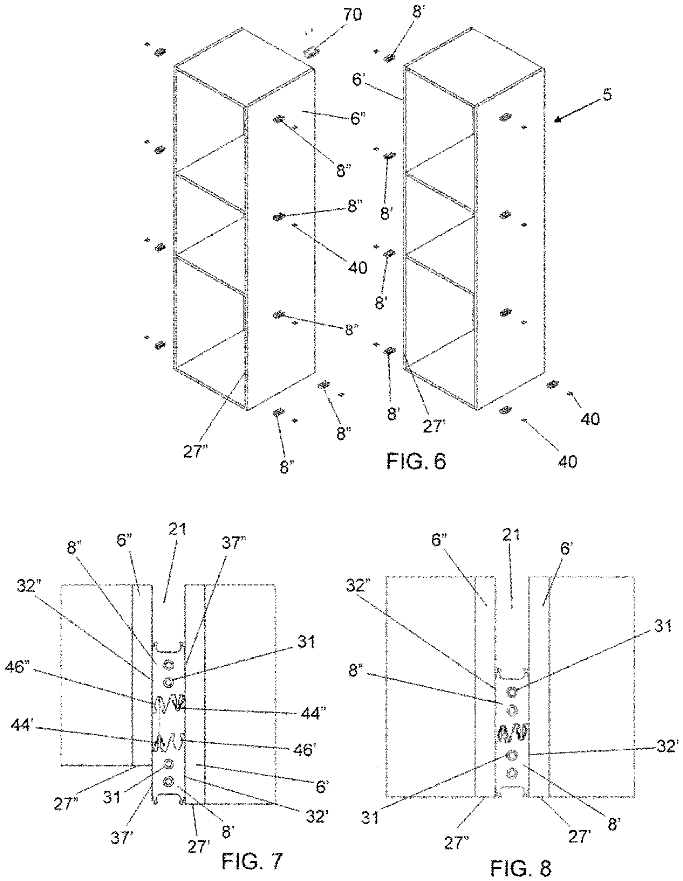

- Figure 6: shows a perspective view of the support elements intended to be associated with a piece of furniture for the vertical application of a covering profiled member,
- Figures 7-8: show a top plan view of the sequence for coupling two support elements to one another,
- Figure 9: shows a perspective view of the vertical application of a covering profiled member to the support elements of Figures 6-8,
- Figure 10: shows a plan view of a first embodiment of the element assembly in accordance with the invention for covering a vertically extended opening,
- Figure 11: shows a plan view of a second embodiment of the element assembly in accordance with the invention for covering a vertically extended opening,

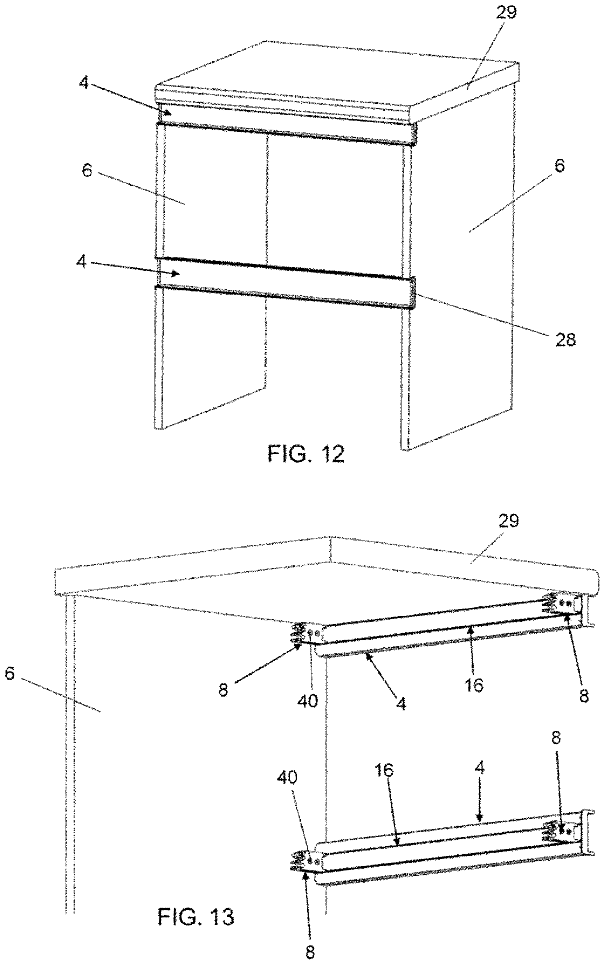

- Figure 12: shows a perspective view of a piece of furniture with an element assembly in accordance with the invention for covering a horizontally extended indentation,
- Figure 13: shows a different perspective view thereof without a side flank of the piece of furniture,
- Figure 14: shows a side view of the internal flank thereof,
- Figure 15: shows a first enlarged detail of Figure 14,
- Figure 16: shows a second enlarged detail of Figure 14,
- Figure 17: shows a view according to section XVII-XVII of Figure 16,
- Figure 18: shows the same detail of Figure 15 in a second embodiment,
- Figure 19: shows the same detail of Figure 16 in a second embodiment.

As it may be seen from the Figures, the assembly 2, in accordance with the invention, for associating a profiled member 4 with a wall 6 of a piece of furniture or the like, comprises an element 8 to be fastened to the aforesaid wall 6 and configured to support said profiled member 4.

In particular, the profiled member 4 has a longitudinal extension and has a slot-shaped cross section, i.e., substantially L- or C-shaped. Suitably, the concavity of the slot 7 is delimited by a first face of the central portion 10 which is interposed between one or two side portions 12 which, suitably, are folded, preferably at an angle of about 90°, with respect to the central portion. Suitably, the corner 11 defined in the passage between the central portion 10 and the side ones 12 may be sharp or more or less rounded.

Advantageously, the ends 14 of the side portions 12 comprise a flat section which is substantially parallel to the central portion 10. Suitably, such flat section may be defined by a bulge of the end 14 itself or by folding by 90° the end of the side portions 12 itself.

Suitably, the profiled member 14 also comprises first elastic engagement means 16 obtained on the face of the central portion 10 opposite with respect to the one delimiting the slot 7. In particular, the first elastic engagement means 16 are obtained on the rear face (i.e., the one intended not to be visible once the profiled member is mounted) of the central portion 10.

Advantageously, the first elastic engagement means 16 comprise two elastic flaps 18 mutually facing and spaced apart. Preferably, the two elastic flaps 18 end with respective heads 19, preferably of a slightly rounded shape, protruding inwardly. Suitably, the bottom area of each head defines with the rear surface of the central section a notch 20.

Preferably, the two elastic flaps 18 are positioned at a mutual distance 22 which, in case of applying the profiled member vertically to cover a vertically extended opening 21, is substantially equal to the width of such opening which is defined between two facing vertical walls 6 of a piece of furniture 5.

Preferably, the side portions 12 are positioned at a mutual distance 24, substantially corresponding to the width of the central portion 10 and which, in case of applying the profiled member 4 horizontally, is substantially equal to the distance between two facing horizontal edges 25 of an indentation 28.

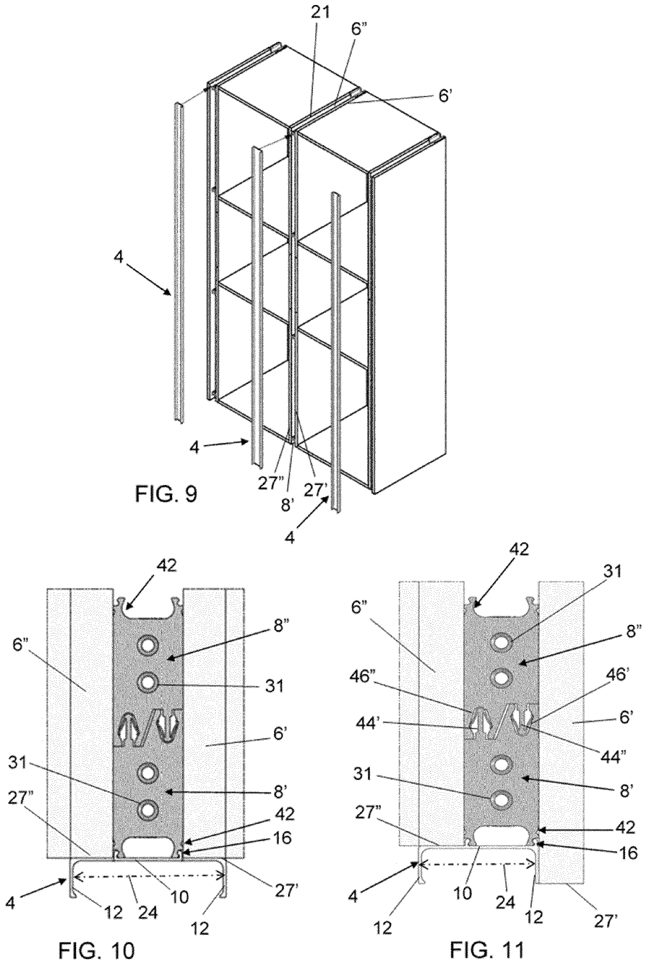

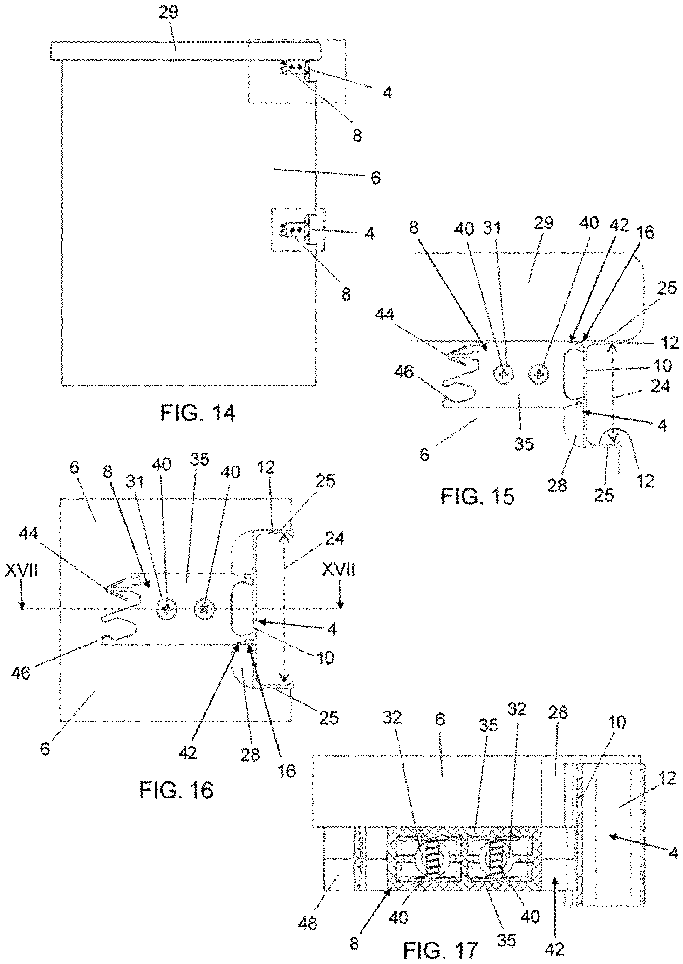

More in detail, the edges 25 delimiting the indentation 28 may be both obtained in the vertical wall 6 which defines a side flank of the piece of furniture (see Figure 16), or one of the two, or even both, may be defined by the base of a shelf or of a top 29 (see Figure 15) of the piece of furniture itself. Furthermore, in case of applying the profiled member vertically to cover a vertically extended opening 21, the distance 24 between the side portions 12 is such to cover, in whole or in part, one (see Figure 11) or both (see Figure 10) the front edges 27 of the vertical walls 6.

Suitably, the distance 24 between the side portions 12 is greater than the distance 22 between the elastic flaps 18.

The support element 8 comprises a body 30, preferably of a substantially parallelepiped shape and internally hollow, in which two groups of through holes, respectively 31 and 32, are advantageously obtained, provided for the passage of conventional fastening screws. In particular, each of the two groups of holes 31 and 32 comprises one or more holes, preferably two as in the Figures.

Suitably, the holes 31 and 32 are obtained in an internal area of said body, preferably in a substantially central area thereof.

Advantageously, the first group of through holes 31 and the second group of through holes 32 are obtained on corresponding faces of said body 30 which are substantially at an angle, and preferably perpendicular, with respect to one another.

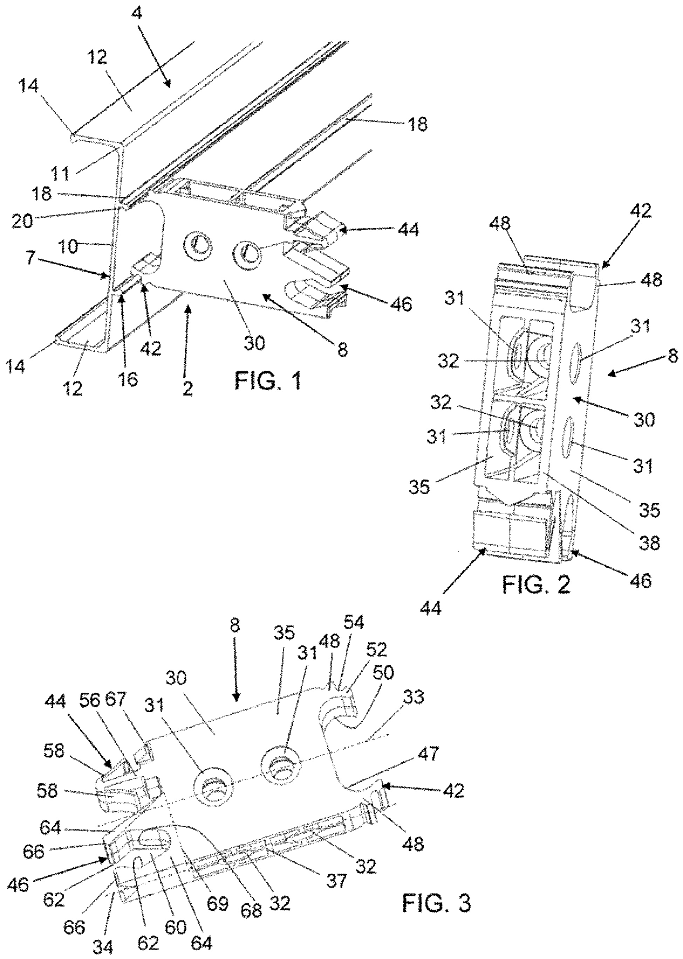

Advantageously, the two holes of the group 31 are aligned along a first direction 33, while the two holes of the second group 32 are aligned along a second direction 32 and, advantageously, such two directions 33 and 34 are parallel with respect to one another (see Figure 3).

Preferably, the holes of the first group 31 are obtained on two first faces 35, parallel with respect to one another, of the body 30 and are mutually aligned, while the holes of the second group 32 are obtained only on a second face 37 of the central body 30 since the opposite face 38 is substantially open.

Suitably, in case of applying the profiled member 4 horizontally, the first group of holes 31 is intended to be crossed by screws 40 for fastening the support element 8 to a vertical wall 6 in which the indentation 28 to be covered is obtained. Suitably, in case of applying the profiled member 4 vertically to cover the vertical opening 21, the second group of holes 32 is intended to be crossed by screws 40 for fastening the support element 8 to the vertical walls 6 of the piece of furniture.

At an end area of the central body 30, second means 42 for the elastic engagement with the first means 16 of the profiled member 4 are obtained, while at the other end area of the central body 30 a pair of detachable interlocking junction members is provided for, of which one member is of the male type 44 and the other is of the female type 46, which preferably are side by side to one another.

Suitably, the end area in which the second engagement means 42 are obtained is defined on the central body 30 at an end thereof opposite with respect to that of the end area in which the pair of detachable interlocking junction members 44, 46 is obtained.

Preferably, the second elastic engagement means 42 comprise a pair of elastic wings 48 mutually facing and spaced apart, each of which cooperates with a corresponding elastic flap 18 of the first engagement means 16 of the profiled member 4. Suitably, the elastic wings 48 laterally delimit a concavity 50 between one another.

Advantageously, each elastic wing 48 comprises a protruding tooth 52, suitably sized to be inserted into the corresponding notch 20 of the first engagement means 16. Suitably, below the tooth 52, a recess 54 is defined, suitably sized to allow the insertion of the head 19 of a corresponding flap 18 of the first engagement means 16.

Advantageously, the member of the male type 44 of said detachable interlocking junction members has a shape substantially similar to an arrow and, for this purpose, comprises a central rod 56 with two inclined elastic arms 58 which are associated with the free end of said rod.

Preferably, the female member 46 of the support element 8' is configured to receive in insertion and to removably interlock with a male member 44 (of another support element 8") which substantially corresponds to that which is provided for at the flank thereof in the same support element 8'.

Advantageously, the female member 46 of said detachable interlocking junction members comprises instead a seat for the insertion and the detachable interlocking of a male member, preferably of a male member 44 provided for in a further and identical support element.

More in detail, suitably, such seat comprises a cavity 60 with an inlet collar 62 of a size smaller with respect to the central area of the cavity itself. Suitably, when inserting the male member 44 of a support element into a corresponding female member 46 of another support element, at first, the elastic arms 58 of the first deform elastically, approaching the central rod 56, so as to allow the passage thereof through the collar 62 of the second and then, once entered into the cavity 60, they re-expand, so that the ends of the arms 58 come into contact with the corresponding depressions 62 laterally obtained in the cavity 60.

Suitably, said cavity 60 is delimited by two flanks 64, of which the innermost one has a substantially inclined flat surface.

Suitably, the alignment and the engagement between two support elements 8' and 8" is obtained by inserting and interlocking the male member 44' of a first element 8' into the female member 46" of the second element 8", as well as by inserting and interlocking the male member 44" of the second element 8" into the female member 46' of the first element 8'. Preferably, both during the preliminary alignment operation and once the interlocking has occurred, the flat surfaces of the internal flank 64 of the two elements 8' and 8" do not come in contact and do not interact with one another, thus avoiding the creation of surface friction.

Advantageously, the distance of the end of the male member 44 from the base 67 thereof is smaller with respect to the distance, again from said base (or more in detail, from an extension 69 thereof), of said inlet collar 62 of the female member 46. Suitably, thereby, the strips 66, which between one another delimit the inlet collar 62, of a first support element 8, abut against the base 67 of a second support element 8 without the end (i.e., the point of the rod 56) of the male member 44 of the latter coming in contact with the bottom 68 of the cavity 60 of the female member 46 of said first element.

The manner of mounting of the element assembly 2 in accordance with the invention is clearly apparent from the description thereof.

In particular, in case of a vertically extended opening 21 defined between two facing vertical walls 6 of the piece of furniture 5, a first support element 8' rests with the second face 37 thereof against a first wall 6' and is fastened to the latter by means of screws 40 which cross the second group of holes 32. Suitably, the first support element 8' is fastened to the first wall 6' so that the second elastic engagement means 42 face towards the front (i.e., towards the visible part of the piece of furniture) and are flush with the front edge 27' of such wall. More in detail, the first support element 8' is fastened so that the concavity 50 delimited by the elastic wings 48 of the second engagement means 42 is vertically oriented.

Furthermore, a second support element 8" is fastened in the same manner to the other wall 6" in a position further back with respect to the front edge 27 and so that the male 44 and female interlocking members 46 thereof face frontally. Suitably, such further back position is defined so that, once the two elements 8' and 8" are coupled to one another, the second engagement means 42 are also flush with the front edge 27" of the other wall 6".

Suitably, the coupling between the two elements 8' and 8" occurs by first making the second face 37' of the first element 8' adhere to the wall portion 6" defined between the front edge 27" thereof and the support element 8" fastened thereto. Correspondingly, the second face 37" of the second element 8" adheres to the first wall 6'. In essence, therefore, the male member 44' of the first element 8' is aligned with the female member 46" of the second element 8" while the male member 44" of the latter is aligned with the female member 46' of the first.

Subsequently, the first vertical wall 6' is slid with respect to the second vertical wall 6", or vice versa, so that the corresponding male members are inserted and interlocked within the respective female members. Advantageously, the top edges of the two walls 6' and 6" may be joined rearwardly by means of an omega-shaped bracket 70.

Finally, the profiled member 4 is applied frontally and vertically so that the first elastic engagement means 16 thereof engage with the second engagement means 42 of the first support element 8'.

In particular, each elastic flap 18 of the profiled member 4 cooperates with a corresponding elastic wing 48 of the first support element 8' so that the head 19 of the first is inserted into the recess 54 obtained in the second, and so that the protruding tooth 52 of the latter is inserted into the notch 20 obtained in said elastic flap 18.

Instead, in case of applying the profiled member 4 horizontally to cover an indentation 28 defined between two facing horizontal edges 25, a single support element 8 is sufficient, which rests with the first face 35 thereof against the vertical wall 6 in which one or both the horizontal edges 25 are defined, and is fastened to the latter by means of screws 40 which cross the first group of holes 31. Suitably, the support element 8 is fastened to the wall 6 so that the concavity 50 delimited by the elastic wings 48 of the second fastening means 42 is horizontally oriented.

Therefore, the profiled member 4 is applied frontally and horizontally so that the first elastic engagement means 16 thereof engage with the second elastic engagement means 42 of the support element 8. In particular, also in this circumstance, each elastic flap 18 of the profiled member 4 cooperates with a corresponding elastic wing 48 of the support element 8 so that the head 19 of the first is inserted in the recess 54 obtained in the second, and so that the protruding tooth 52 of the latter is inserted into the notch 20 obtained in said elastic flap 18.

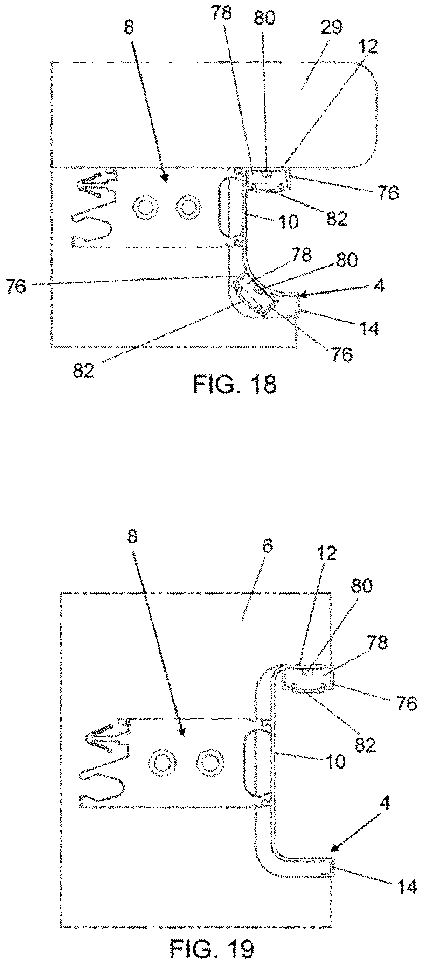

Advantageously, in the embodiments shown in the Figures 18 and 19, the profiled member 4 comprises all the features, both essential and preferential and/or of detail shown above, and, in addition, it also comprises one or more additional sections 76, which extend from the rear and/or front face of the central portion 10 and/or of the side portions 12, and which are suitably shaped and folded to define one or more grooves 78 for housing lighting means 80, preferably led strips. Suitably, the grooves 78 may be closed with respective covers 82 which are interlocked between the facing ends of two additional sections 76.

The element assembly 2 in accordance with the invention is particularly advantageous with respect to the conventional ones, as:
- it may be used to apply profiled members both vertically and horizontally,
- the individual elements may be quickly and easily coupled to and decoupled from one another without using any tools,
- it is detachable, since the profiled member, once applied, may be easily removed when need be,
- it is economical, since it is constituted by a small number of components which are simple to manufacture and cost-effective, and which may easily be produced in series.

In particular, none of the prior documents FR2547522, GB2240580, US2016/0186925, US9597792 and EP1746321 has a support element comprising a body which, at an end area, has a pair of detachable interlocking junction members, of which one member of said pair is of the male type while the other member of the same pair is of the female type. More in detail, none of the solutions described in FR2547522, GB2240580, US2016/0186925, US9597792 and EP1746321 teaches or suggests a support element which, at one end, may be secured to a covering profiled member while at the other end may be potentially secured to another support element which substantially is of the same type. Suitably, the presence of the pair of detachable interlocking junction members is advantageous in that it allows, when need be, to couple stably, but detachably from one another, two support elements identical to one another, each of which is fastened to a different wall; furthermore, advantageously, in such situation, the space defined between said two thus mutually secured walls is then concealed by means of a covering profiled member which engages with the elastic engagement means thereof to the corresponding elastic engagement means provided for at the other end area of the support element.

## Claims

1. An improved element assembly (2) for associating a profiled member (4) with a piece of furniture (5) or the like, **characterized in that** it comprises:
- a longitudinally extended profiled member (4) with a substantially L- or C-shaped cross section and provided, at the rear face thereof, with first elastic engagement means (16),
- at least one support element (8) comprising a body (30) which is provided in the internal area thereof with at least one hole (31, 32) for screws for fastening said support element (8) to a wall (6) of said piece of furniture (5) and which, at a first end area of said body (30), said support element (8) comprises second elastic engagement means (42) intended to cooperate with said first elastic engagement means (16) of said profiled member (4) and which, at the other end area of said body (30), which is opposite to the first one, comprises at least one pair of detachable interlocking junction members, of which one member of said pair is of the male type (44) and the other member of said pair is of the female type (46).

2. An assembly according to claim 1, **characterized in that** said profiled member (4) has a front face with a central portion (10) and at least one side portion (12) which is folded with respect to said central portion (10) so as to define a slot (7), said first elastic engagement means (12) being provided for at the rear face of said central portion (10).

3. An assembly according to one or more of the preceding claims, **characterized in that** the male (44) and female (46) members of said pair of detachable interlocking junction members of said support element (8) are arranged side by side to one another and are adapted to be respectively coupled with a female member (46') and with a male member (44') of a further support element (8'), preferably of the same type.

4. An assembly according to one or more of the preceding claims, **characterized in that** said first elastic engagement means (16) comprise a pair of elastic flaps (18) which are mutually facing and spaced apart, and **in that** said second elastic engagement means (42) comprise a pair of elastic wings (48) which are mutually facing and spaced apart, each elastic flap (18) of said first elastic engagement means (16) cooperating with an elastic wing (48) of said second elastic engagement means (42).

5. An assembly according to the preceding claim, **characterized in that** said pair of elastic flaps (18) are positioned at a mutual distance (22) equal to the width of a vertically extended opening (21) defined between two vertical walls (6) and intended to be covered by said vertically oriented profiled member (4).

6. An assembly according to one or more of the preceding claims, **characterized in that** said first elastic engagement means (16) comprise a head (19) adapted to be inserted into a corresponding recess (54) obtained in said second elastic engagement means (42) and/or **in that** said second elastic engagement means (42) comprise a protruding tooth (52) adapted to be inserted into a corresponding notch (20) obtained in said first elastic engagement means (42).

7. An assembly according to one or more of the preceding claims, **characterized in that** said support element (8) comprises a first group of at least two through holes (31), to be used for fastening said element to a vertical wall (6) of said piece of furniture (5) in case of applying said profiled member substantially horizontally, and a second group of at least two through holes (32), to be used for fastening said element to a vertical wall (6) of said piece of furniture (5) in case of applying said profiled member substantially vertically.

8. An assembly according to one or more of the preceding claims, **characterized in that** said first group of at least two through holes (31) and said second group of at least two through holes (32) are obtained on corresponding faces of said body (30) which are substantially at an angle, and preferably perpendicular, with respect to one another.

9. An assembly according to one or more of the preceding claims, **characterized in that** the body (30) of said support element (8) has a parallelepiped shape and on one or both pairs of faces, parallel with respect to one another, of said body (30) said first and said second through holes (31, 32) are obtained.

10. An assembly according to one or more of the preceding claims, **characterized in that** the male member (44) of said pair of detachable interlocking junction members comprises an arrow-shaped body, and/or **in that** the female member (46) of said pair of detachable interlocking members comprises a cavity (60) with an inlet collar (62) for the insertion and the interlocking of said male member (44) therein.

11. An assembly according to one or more of the preceding claims, **characterized in that** the distance of the end of the male member (44) from the base (67) thereof is smaller with respect to the distance of the inlet (62) of the female member (46) with respect to said base (67).

12. An assembly according to one or more of the preceding claims, **characterized in that** said profiled member (4) comprises additional sections (76) configured to define at least one groove (78) for housing lighting means (80).

13. A method for associating a profiled member (4) with a piece of furniture (5) or the like by means of an element assembly (2) according to one or more of claims 1 to 12, **characterized in that**, in case of applying the profiled member (4) substantially horizontally to cover an indentation (28) defined between two facing horizontal edges (25) of the piece of furniture (5), the following operations are carried out:
- a support element (8) of said element assembly (2) is fastened, at said indentation (28), to a vertical wall (6) of said piece of furniture so that the second elastic engagement means (42) of said support element (8) face frontally, i.e., towards the visible side of said piece of furniture (5), and are horizontally oriented,
- said profiled member (4) is applied frontally and horizontally so that the first elastic engagement means (16) thereof engage with the corresponding second elastic engagement means (42) of said support element (8).

14. A method for associating a profiled member (4) with a piece of furniture (5) or the like by means of an element assembly (2) according to one or more of claims 1 to 12, **characterized in that**, in case of applying the profiled member (4) substantially vertically to cover a vertically extended opening (21) defined between two facing vertical walls (6', 6") of the piece of furniture (5), the following operations are carried out:
- a first support element (8') of said element assembly (2) is fastened to a first vertical wall (6') so that the second elastic engagement means (42') thereof face frontally, i.e., towards the visible side of said piece of furniture (5), and are vertically oriented,
- a second support element (8") of said element assembly (2) is fastened to the other vertical wall (6") so that the second elastic engagement means (42") thereof face rearwardly and are vertically oriented,
- the two support element (8', 8"), thus fastened to the respective vertical walls (6', 6"), are coupled with one another by inserting and interlocking the male member (44') of the first element (8') into the female member (46") of the second element (8") and the male member (44") of the second element (8") into the female member (46') of the first element (8'),
- said profiled member (4) is applied frontally and vertically so that the first elastic engagement means (16) thereof engage with the corresponding second elastic engagement means (42') of said first support element (8').

15. A method for associating a profiled member (4) with a piece of furniture (5) or the like by means of an element assembly (2) according to one or more of claims 1 to 12, **characterized in that**, in case of applying the profiled member (4) substantially horizontally to cover an indentation (28) defined between two facing horizontal edges (25) of the piece of furniture (5), the following operations are carried out:
- a support element (8) of said element assembly (2) is fastened, at said indentation (28), to a vertical wall (6) of said piece of furniture so that the second elastic engagement means (42) of said support element (8) face frontally, i.e., towards the visible side of said piece of furniture (5), and are horizontally oriented,
- said profiled member (4) is applied frontally and horizontally so that the first elastic engagement means (16) thereof engage with the corresponding second elastic engagement means (42) of said support element (8),
and **in that**, in case of applying the profiled member (4) substantially vertically to cover a vertically extended opening (21) defined between two facing vertical walls (6', 6") of the piece of furniture (5), the following operations are carried out:
- a first support element (8') of said element assembly (2) is fastened to a first vertical wall (6') so that the second elastic engagement means (42') thereof face frontally, i.e., towards the visible side of said piece of furniture (5), and are vertically oriented,
- a second support element (8") of said element assembly (2) is fastened to the other vertical wall (6") so that the second elastic engagement means (42") thereof face rearwardly and are vertically oriented,
- the two support element (8', 8"), thus fastened to the respective vertical walls (6', 6"), are coupled with one another by inserting and interlocking the male member (44') of the first element (8') into the female member (46") of the second element (8") and the male member (44") of the second element (8") into the female member (46') of the first element (8'),
- said profiled member (4) is applied frontally and vertically so that the first elastic engagement means (16) thereof engage with the corresponding second elastic engagement means (42') of said first support element (8').
